# EUROPÄISCHE PATENTSCHRIFT

(11) **EP 2 740 692 B1**
(45) Veröffentlichungstag und Bekanntmachung des Hinweises auf die Patenterteilung: **15.10.2014**
(21) Anmeldenummer: 13195970.2
(22) Anmeldetag: 06.12.2013
(51) Int. Cl.: B65G 65/48, B65G 65/46

(54) **Vorrichtung zum Austragen von Schüttgut aus einem Lagerraum**
Device for extracting bulk material from a storage space
Dispositif d'extraction de produits en vrac à partir d'un local de stockage

(30) Priorität: 07.12.2012 AT 505672012
(43) Veröffentlichungstag der Anmeldung: 11.06.2014
(73) Patentinhaber: Hargassner Ges mbH, 4952 Weng/Innkreis (AT)
(72) Erfinder: Hargassner, Anton, 4952 Weng (AT)
(74) Vertreter: Hübscher, Helmut

(56) Entgegenhaltungen:
- EP-A2- 2 196 408
- FR-A1- 2 034 857
- NL-A- 296 522

## Beschreibung

Die Erfindung bezieht sich auf eine Vorrichtung zum Austragen von Schüttgut aus einem Lagerraum mit einem oberhalb des Bodens des Lagerraums angeordneten Rotor, der sich über den Bodenbereich erstreckende, aus hochkant verlaufenden Blattfedern gebildete Räumarme mit abwechselnd unterschiedlicher Länge aufweist, und mit einer radial zum Rotor verlaufenden, in einem von den Räumarmen überstrichenen, trogförmigen Gehäuse angeordneten Austragschnecke.

Um die zur Verfügung zu stellende Antriebsenergie für Vorrichtungen zum Austragen von Schüttgut, beispielsweise von stückeligem Brennstoff, wie Hackschnitzel oder Holzpellets, aus einem Lagerraum vergleichsweise niedrig halten zu können, ist es bekannt, die Räumarme als biegeelastische, hochkant angeordnete Blattfedern anzuordnen. Die über den Mitnehmerwiderstand des auszutragenden Schüttguts auf die Räumarme ausgeübten Kräfte bewirken nämlich, dass sich die Räumarme entgegen der Drehrichtung des Rotors spiralartig biegen, sodass nur ein innerer Bodenbereich von den Räumarmen überstrichen wird und der hierfür einzusetzende Energiebedarf beschränkt bleibt. Mit zunehmender Entleerung des Lagerraums nimmt die Biegebelastung der Räumarme ab, die allmählich unter einer radialen Ausweitung ihrer Räumfläche in ihre gestreckte Ausgangslage zurückkehren. Das vorrangige Räumen eines inneren Lagerraums könnte zusätzlich durch den Einsatz von abwechselnd unterschiedlich langen Räumarmen unterstützt werden. Nachteilig bei diesen Räumarmen ist allerdings, dass insbesondere längere Blattfedern bei zunehmender Streckung dazu neigen, trotz ihrer Hochkantlage im Bereich ihrer äußeren Enden nach oben auszuweichen, was die Entleerung des Lagerraums erschwert.

Das Dokument FR2034857 A1 offenbart eine Vorrichtung zum Austragen von Schüttgut aus einem Lagerraum nach dem Oberbegriff des Anspruchs 1.

Der Erfindung liegt somit die Aufgabe zugrunde, eine Vorrichtung zum Austragen von Schüttgut aus einem Lagerraum mit biegeelastischen Räumarmen aus hochkant angeordneten Blattfedern so auszugestalten, dass Beeinträchtigungen beim Austragen des Schüttguts durch nach oben ausweichende Räumarme vermieden werden, ohne auf die Vorteile solcher biegeelastischer Räumarme verzichten zu müssen.

Ausgehend von einer Vorrichtung der eingangs geschilderten Art zum Austragen von Schüttgut aus einem Lagerraum löst die Erfindung die gestellte Aufgabe dadurch, dass die Räumarme mit abwechselnd unterschiedlicher Länge ausgebildet sind und dass die Räumarme kürzerer Länge gegenüber der durch die unteren Längsränder der Räumarme mit der größeren Länge bestimmten Räumfläche nach unten vorstehen.

Der Erfindung liegt die Erkenntnis zugrunde, dass ein verstärktes Ausweichen der durch hochkant angeordnete Blattfedern gebildeten Räumarme immer dann auftritt, wenn sich die Blattfedern in einem inneren Bereich noch auf einer Schüttgutschicht abstützen können. Fehlt diese Schüttgutschicht zumindest teilweise in einem angemessenen Innenbereich, so kann eine Auslenkung der hochkant gestellten Blattfedern im Außenbereich weitgehend vermieden werden. Da nach der Erfindung die kürzeren Räumarme gegenüber der Räumfläche der längeren Räumarme nach unten vorstehen und damit eine tiefer gelegene Räumfläche als die längeren Räumarme bestimmen, kann über die kürzeren Räumarme jene Schüttgutschicht abgetragen werden, die bei einer Annäherung der längeren Räumarme an die Strecklage eine Abstützung der längeren Räumarme bewirken könnte, sodass damit die Gefahr eines den Schüttgutaustrag behindernden Auslenkens der längeren Räumarme nach oben gebannt wird.

Die Maßnahme, die kürzeren Räumarme gegenüber der Räumfläche der längeren Räumarme nach unten vorstehen zu lassen, kann konstruktiv auf zwei Arten verwirklicht werden. Eine Möglichkeit besteht darin, die Räumarme kürzerer Länge gegenüber den Räumarmen mit der größeren Länge in Richtung der Rotorachse versetzt anzuordnen. Die andere Möglichkeit ergibt sich, wenn die Räumarme kürzerer Länge gegenüber der Räumfläche der Räumarme mit der größeren Länge radial nach außen abfallend geneigt verlaufen. In diesem Fall nimmt der Abstand der durch die kürzeren Räumarme bestimmten Räumfläche von der Räumfläche der längeren Räumarme radial nach außen zu. Bei einer bloß axial versetzten Anordnung der Räumarme ist dieser Abstand über die Länge der kürzeren Räumarme konstant. In beiden Fällen wird erreicht, dass durch die kürzeren Räumarme eine Schüttgutschicht abgetragen wird, sodass sich keine Unterstützung der längeren Räumarme im Bereich dieser abgetragenen Schüttgutschicht ergibt und ein nach oben gerichtetes Auslenken der längeren Räumarme in ihrem Außenbereich vermieden wird.

Mit zunehmender Entleerung des Lagerraums besteht die Gefahr, dass die Förderschnecke durch die Räumarme nicht gleichmäßig beschickt werden kann, was beispielsweise im Falle einer Brennstoffförderung zu Schwierigkeiten in der Beschickung einer Feuerung mit Brennstoff führen kann. Um eine gleichmäßige Beschickung der Förderschnecke auch bei einem bereits weitgehend entleerten Lagerraum sicherstellen zu können, kann das trogförmige Gehäuse für die Austragschnecke im Bereich der in Drehrichtung des Rotors hinteren Gehäusewand einen gegen die Räumarme vorstehenden Abstreifer aufweisen. Das durch die Räumarme in Umfangsrichtung angeförderte Schüttgut wird durch den vorstehenden Abstreifer im Gehäusebereich aufgestaut, sodass für eine Vergleichmäßigung der Befüllung des Gehäuses der Förderschnecke gesorgt wird. Durch das Abstreifen des Schüttguts von den Räumarmen wird außerdem verhindert, dass Schüttgut unnötig im Kreis gefördert wird. Damit auf die erfindungsgemäße unterschiedliche Anordnung der Räumarme am Rotor Rücksicht genommen werden kann, kann der Abstreifer im Bereich der kürzeren Räumarme eine niedrigere Höhe als im die kürzeren Räumarme überragenden Längenbereich der längeren Räumarme aufweisen.

In der Zeichnung ist der Erfindungsgegenstand beispielsweise dargestellt. Es zeigen
- Fig. 1: eine erfindungsgemäße Vorrichtung zum Austragen von Schüttgut aus einem Lagerraum in einer vereinfachten Seitenansicht,
- Fig. 2: diese Vorrichtung in einer Draufsicht,
- Fig. 3: eine Konstruktionsvariante einer erfindungsgemäßen Vorrichtung in einer vereinfachten Seitenansicht und
- Fig. 4: einen Schnitt nach der Linie IV-IV der Fig. 3 in einem größeren Maßstab.

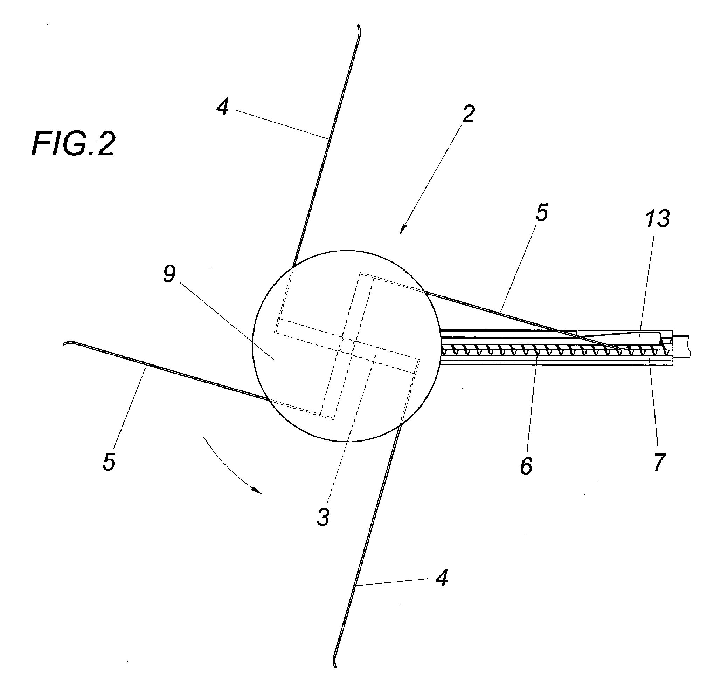

Die Vorrichtung zum Austragen von Schüttgut aus einem lediglich strichpunktiert angedeuteten Lagerraum 1, umfasst einen Rotor 2 mit einem Drehkreuz 3, an dem Räumarme 4 und 5 in Form von hochkant ausgerichteten Blattfedern befestigt sind. Wie der Fig. 2 entnommen werden kann, weisen die Räumarme 4, 5 abwechselnd unterschiedliche Länge auf. Mit Hilfe der Räumarme 4, 5 wird eine radial zum Rotor 2 verlaufende Förderschnecke 6 beschickt, deren trogförmiges, im Bereich der Räumarme 4, 5 nach oben offenes Gehäuse 7 von den Räumarmen 4, 5 überstrichen wird, sodass das von den Räumarmen 4, 5 mitgenommene Schüttgut in das Gehäuse 7 eingebracht und mit Hilfe der Förderschnecke 6 aus dem Lagerraum 1 ausgetragen werden kann. Der Antrieb des Rotors 2 erfolgt vorzugsweise über die Schneckenwelle, an die ein Winkelgetriebe 8 für den Rotorantrieb angeschlossen ist. Das Drehkreuz 3 des Rotors 2 wird durch eine Scheibe 9 abgedeckt, die vorzugsweise einen Verteilerkegel für das Schüttgut trägt.

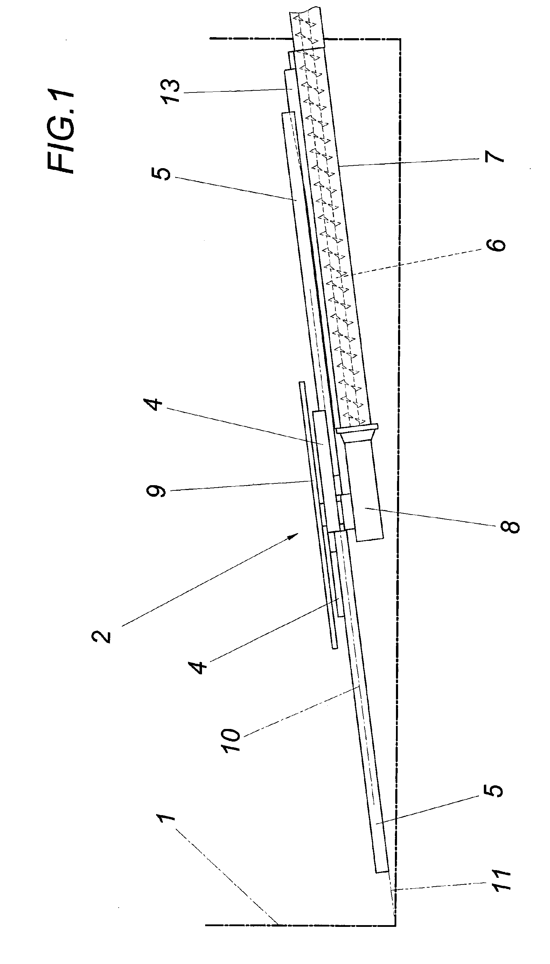

Zum Unterschied zu herkömmlichen Austragsvorrichtungen dieser Art weisen die Räumarme 4, 5 keine gemeinsame, durch die unteren Längsränder der Blattfedern bestimmte Räumfläche auf. Wie sich aus der Fig. 1 ergibt, liegt die strichpunktiert angedeutete Räumfläche 10 der längeren Räumarme 4 aufgrund einer gegenseitigen axialen Versetzung der Räumarme 4, 5 mit Abstand oberhalb der Räumfläche 11 der kürzeren Räumarme 5. Dieser Umstand bedingt, dass bei fortgeschrittener Entleerung des Lagerraums 1 im Bereich der kürzeren Räumarme 5 eine von den längeren Räumarmen 4 nicht erreichbare Schüttgutschicht abgetragen werden kann, sodass die längeren Räumarme 4 im Bereich dieser abgetragenen Schüttgutschicht keine Abstützung auf dem Schüttgutboden erfahren können, was eine wesentliche Voraussetzung dafür darstellt, dass die längeren Räumarme 4 im Bereich ihrer äußeren Enden nicht von der diesen Räumarmen 4 zugedachten Räumfläche 10 abheben. Die Räumwirkung der längeren Räumarme 4 kann demnach auch bei einer weitgehenden Entleerung des Lagerraums 1 uneingeschränkt aufrechterhalten werden, wenn es gilt, vor allem Restmengen an Schüttgut im Außenbereich des Lagerraums 1 auszutragen.

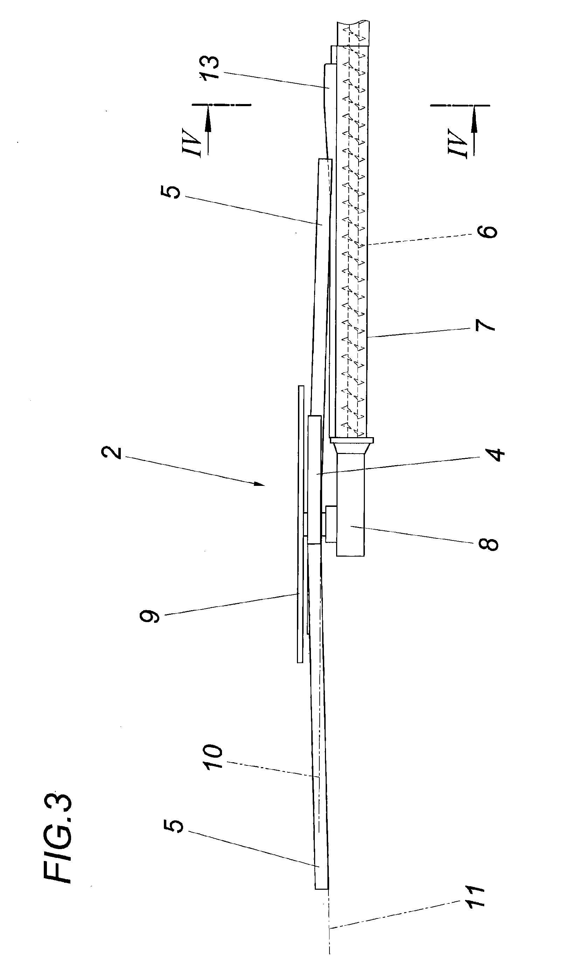

Zum Unterschied zur Ausführungsform nach den Fig. 1 und 2 zeigt das Ausführungsbeispiel nach der Fig. 3 kürzere Räumarme 5, die gegenüber der ebenen Räumfläche 10 der längeren Räumarme 4 nach außen abfallend geneigt verlaufen, sodass sich eine kegelförmige Räumfläche 11 ergibt. Aufgrund dieser Anordnung der kürzeren Räumarme 5 am Drehkreuz 3 des Rotors 2 wird durch die kürzeren Räumarme 5 ebenfalls eine Schüttgutschicht unterhalb der längeren Räumarme 4 abgetragen, doch nimmt die Abtragungshöhe gegenüber den längeren Räumarmen 4 radial nach außen zu. Die Wirkung dieser Maßnahme bleibt allerdings vergleichbar, weil wiederum eine sonst auf die längeren Räumarme 4 einflussnehmende Stützschicht des Schüttguts durch die kürzeren Räumarme 5 abgetragen wird.

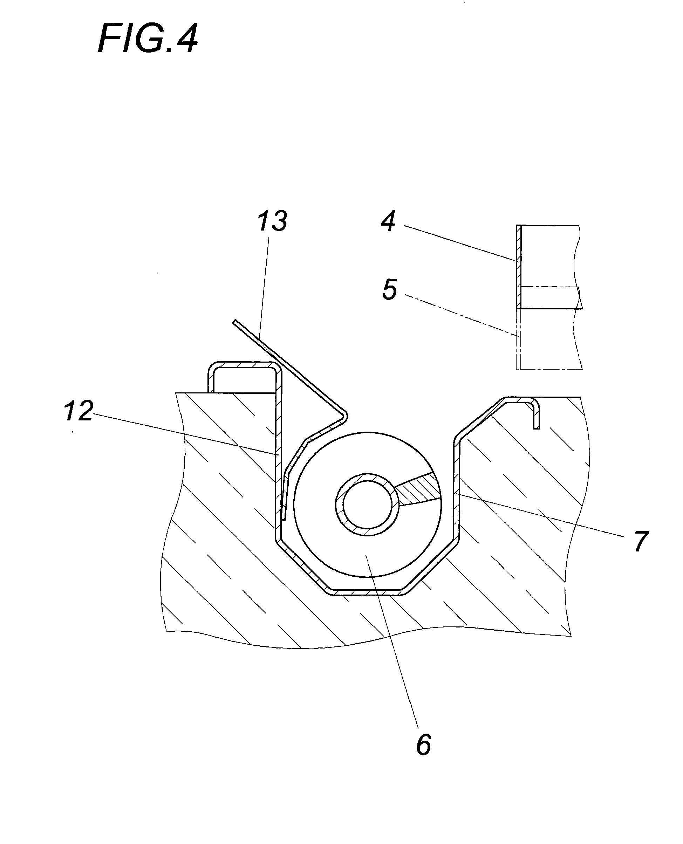

Wie insbesondere der Fig. 4 entnommen werden kann, ist das trogförmige Gehäuse 7 der Förderschnecke 6 im Bereich der in Drehrichtung des Rotors 2 hinteren Gehäusewand 12 mit einem gegen die nach oben vorstehenden Abstreifer 13 versehen. Dieser Abstreifer 13 bedingt einen Rückstau des durch die Räumarme 4 und 5 gegen diesen Abstreifer 13 geförderten Schüttguts mit der Wirkung, dass selbst bei einer über die Länge der Beschickungsöffnung des Gehäuses 7 ungleichmäßigen Förderung des Schüttguts durch die Räumarme 4, 5 eine gleichmäßige Beschickung der Förderschnecke 6 sichergestellt werden kann, weil das vor dem Abstreifer 13 angestaute Schüttgut gewissermaßen einen Pufferspeicher darstellt. Da die Räumarme 4, 5 aufgrund ihrer besonderen Anordnung im Bereich des Abstreifers 13 der Höhe nach versetzt verlaufen, empfiehlt es sich, den Abstreifer 13 an diesen Versatz anzupassen, indem der Abstreifer 13 im Bereich der kürzeren Räumarme 5 eine niedrigere Höhe als im die kürzeren Räumarme 5 überragenden Längenbereich der längeren Räumarme 4 aufweist, wie dies aus den Fig. 2 und 3 ersichtlich ist.

## Patentansprüche

1. Vorrichtung zum Austragen von Schüttgut aus einem Lagerraum (1) mit einem oberhalb des Bodens des Lagerraums (1) angeordneten Rotor (2), der sich über den Bodenbereich erstreckende, aus hochkant verlaufenden Blattfedern gebildete Räumarme (4, 5) aufweist, und mit einer radial zum Rotor (2) verlaufenden, in einem von den Räumarmen (4, 5) überstrichenen, trogförmigen Gehäuse (7) angeordneten Austragschnecke (6), **dadurch gekennzeichnet, dass** die Räumarme (4, 5) mit abwechselnd unterschiedlicher Länge ausgebildet sind und dass die Räumarme (5) kürzerer Länge gegenüber der durch die unteren Längsränder der Räumarme (4) mit der größeren Länge bestimmten Räumfläche (10) nach unten vorstehen.

2. Vorrichtung nach Anspruch 1, **dadurch gekennzeichnet, dass** die Räumarme (5) kürzerer Länge gegenüber den Räumarmen (4) mit der größeren Länge in Richtung der Rotorachse versetzt angeordnet sind.

3. Vorrichtung nach Anspruch 1, **dadurch gekennzeichnet, dass** die Räumarme (5) kürzerer Länge gegenüber der Räumfläche (10) der Räumarme (4) mit der größeren Länge radial nach außen abfallend geneigt verlaufen.

4. Vorrichtung nach einem der Ansprüche 1 bis 3, **dadurch gekennzeichnet, dass** das trogförmige Gehäuse (7) für die Austragschnecke (6) im Bereich der in Drehrichtung des Rotors (2) hinteren Gehäusewand (12) einen gegen die Räumarme (4, 5) vorstehenden Abstreifer (13) aufweist.

5. Vorrichtung nach Anspruch 4, **dadurch gekennzeichnet, dass** der Abstreifer (13) im Bereich der kürzeren Räumarme (5) eine niedrigere Höhe als im die kürzeren Räumarme (5) überragenden Längenbereich der längeren Räumarme (4) aufweist.

## Claims

1. Device for discharging bulk material from a storage chamber (1) having a rotor (2) disposed above the floor of the storage chamber (1) and comprising clearing arms (4, 5) extending over the floor region and formed from leaf springs extending on edge, and having a discharge screw (6) extending radially with respect to the rotor (2) and disposed in a trough-shaped housing (7) over which the clearing arms (4, 5) pass, **characterised in that** the clearing arms (4, 5) are formed having alternately differing lengths and that the clearing arms (5) with the shorter length protrude downwards with respect to the clearing plane (10) defined by the lower longitudinal edges of the clearing arms (4) with the longer length.

2. Device as claimed in claim 1, **characterised in that** the shorter clearing arms (5) are disposed offset with respect to the longer clearing arms (4) in the direction of the rotor axis.

3. Device as claimed in claim 1, **characterised in that** the shorter clearing arms (5) extend in an inclined manner downwards in the radially outward direction with respect to the clearing plane (10) of the longer clearing arms (4).

4. Device as claimed in any one of claims 1 to 3, **characterised in that**, in the region of the housing wall (12) which is at the rear in the rotational direction of the rotor (2), the trough-shaped housing (7) for the discharge screw (6) has a stripper (13) protruding towards the clearing arms (4, 5).

5. Device as claimed in claim 4, **characterised in that** the height of the stripper (13) is lower in the region of the shorter clearing arms (5) than in the longitudinal region of the longer clearing arms (4) protruding beyond the shorter clearing arms (5).

## Revendications

1. Dispositif d'extraction de produits en vrac à partir d'un local de stockage (1) avec un rotor (2) disposé au-dessus du sol du local de stockage (1) qui présente des bras de raclage (4, 5) formés de ressorts à lame placés sur la tranche, s'étendant au-dessus de la zone du sol, et avec une vis d'extraction (6) disposée dans un boîtier (7) en forme d'auge, balayé par les bras de raclage (4, 5), situé radialement au rotor (2), **caractérisé en ce que** les bras de raclage (4, 5) sont formés avec des longueurs différentes alternativement et **en ce que** les bras de raclage (5) de longueur plus courte font saillie vers le bas par rapport à la face de raclage (10) définie par les bords longitudinaux inférieurs des bras de raclage (4) de plus grande longueur.

2. Dispositif selon la revendication 1, **caractérisé en ce que** les bras de raclage (5) de longueur plus courte sont disposés décalés par rapport aux bras de raclage (4) de plus grande longueur en direction de l'axe du rotor.

3. Dispositif selon la revendication 1, **caractérisé en ce que** les bras de raclage (5) de longueur plus courte sont inclinés, en pente, vers l'extérieur, radialement, par rapport à la face de raclage (10) des bras de raclage (4) de longueur plus grande.

4. Dispositif selon l'une des revendications 1 à 3, **caractérisé en ce que** le boîtier (7) en forme d'auge pour la vis d'extraction (6) présente, dans la zone de la paroi du boîtier (12) arrière dans le sens de rotation du rotor (2), un racleur (13) en saillie face aux bras de raclage (4, 5).

5. Dispositif selon la revendication 4, **caractérisé en ce que** le racleur (13) présente dans la zone des bras de raclage (5) plus courts une hauteur inférieure à celle dans la zone longitudinale, dépassant les bras de raclage (5) plus courts, des bras de raclage (4) plus longs.
